# EUROPEAN PATENT SPECIFICATION

(11) **EP 2 352 695 B1**
(45) Date of publication and mention of the grant of the patent: **11.12.2013**
(21) Application number: 09740994.0
(22) Date of filing: 15.10.2009
(51) Int. Cl.: B67D 3/04, F16K 3/26

(54) **A DISPENSING VALVE ARRANGEMENT FOR A CONTAINER**
AUSGABEVENTILVORRICHTUNG FÜR EINEN BEHÄLTER
AGENCEMENT DE SOUPAPE DE DISTRIBUTION POUR UN RÉCIPIENT

(30) Priority: 18.10.2008 DE 102008052277
(43) Date of publication of application: 10.08.2011
(73) Proprietor: Itw Automotive Products GmbH, 58636 Iserlohn (DE)
(72) Inventor: GRAMSS, Rainer, 29690 Buchholz Aller (DE)
(74) Representative: Hauck Patent- und Rechtsanwälte
(86) International application number: PCT/IB2009/054551
(87) International publication number: WO 2010/044074

(56) References cited:
- WO-A-2007/137238
- DE-C- 554 131
- US-A- 4 353 488
- US-A- 4 742 851
- US-A- 5 927 557

## Description

The present invention relates to a receptacle's dispenser valve system as claimed in claim 1.

A water mains supply network is lacking at many people-attracting sites. For people to have access to drinking water, a receptacle is required allowing feeding them water portions through a dispenser. Such situations are encountered for instance at pilgrimage sites. Sanitary conditions are highly desirable.

From US 4742851 a faucet for a liquid container including a tubular housing is known which is mounted in an opening in the container. The faucet further includes a tubular valve which is slideably mounted in the housing. The valve includes a dispensing opening, and the valve is moveable between a closed position in which the dispensing opening is positioned rearwardly of a front end of the housing and an open position in which the dispensing opening is positioned forwardly of a front end of the housing. A first and second seal are provided for sealingly engaging the housing when the valve is closed and when the valve is opened until the dispensing opening is at least partially opened.

The objective of the present invention is to create a liquids dispenser valve system for a receptacle being filled with a liquid, in particular water, said dispenser allowing delivering in sanitary manner given portions of such a liquid when being actuated in simple manner. The valve system should be easy to manufacture and install.

This problem is solved by the features of claim 1.

The dispenser valve system of the present invention comprises an annular adapter fitting into an aperture of the said receptacle's wall. The annular adapter receives a tubular valve housing which can be linked to the adapter by a geometric interlock element. In turn the valve housing receives a tubular valve member displaceable within this valve housing and fitted at the inner end with a sealing cup cooperating in sealing manner with the facing end of the valve housing. The tubular valve member is fitted near the sealing cup with at least one radial aperture. The valve housing also receives a valve spring acting on said valve member and biasing the valve cup toward the valve housing. At its outer end, the valve member also is fitted with a spout. Typically the radial aperture in the valve member is situated within the valve housing, as a result of which the liquid is prevented from penetrating the valve member. If on the hand a pressure is exerted on the valve member which thereby is displaced toward the receptacle, the radial aperture moves outside the valve housing and the liquid may flow through it into the tubular duct of the valve member and from there to the outside through said spout.

As indicated above, the liquid may be dispensed merely by exerting pressure on the valve member. The people removing liquid from the receptacle using the dispenser valve system are kept out of contact with the liquid. The liquid is therefore dispensed sanitarily.

The dispenser valve system of the present invention is composed of simple parts easily assembled/disassembled. When cleaning is desired, the valve housing may be removed from the adapter and be cleansed appropriately. To also allow easily removing the adapter from the receptacle wall's orifice, the adapter consists of two mutually telescoping and interlocking segments each fitted with an annular flange, one of which rests against the inside of the receptacle wall and the other on the outside of it. The interlock of the two adapter segments may be in the form of a snap-in connection that is easily released. The outer annular flange may be a conical sealing flange, whereas the inner flange receives an annular seal to preclude liquid leaking out through a gap between the adapter and a wall of the hole.

A variety of ways may be used to geometrically interlock the valve housing within the adapter. In one design of the present invention, the valve housing may be linked by a bayonet connection to the adapter. Illustratively the adapter is fitted with a bayonet groove and the valve housing with at least one radial protrusion cooperating with the adapter groove to affix the valve housing in the adapter. Such a design not only allows simple valve system assembly, but also simple removal, where required.

To preclude liquid leaking out through any gap between the valve housing and the adapter's inside wall, one embodiment mode of the present invention requires fitting this valve housing with a peripheral, radial flange resting by means of an annular seal against the outside of the receptacle wall. Advantageously the outside zone of the receptacle wall shall be a plane surface around the valve system to implement effective valve housing sealing.

Obviously the diameter of the valve cup is larger than the inside diameter of the tubular valve housing. To allow installing the valve member, one embodiment of the present invention provides the valve cup be mounted by a radial pin on the valve member. Such installation takes place after the valve member has been inserted so far into the valve housing that its rear end shall project beyond the valve housing, whereby the radial pin then can be affixed through boreholes in the valve member.

Advantageously, according to another embodiment of the present invention, the valve member shall be displaceable only axially within a linear guide in the valve housing.

In one embodiment mode of the present invention, the valve spring is helical, encloses the valve member, and is configured between a stop on the valve member's outside and a compression ring enclosing the valve member. The compressive ring rests by means of an annular seal against an annular shoulder inside the valve housing. The helical spring prestresses the valve member toward the closed position.

In a further embodiment mode of the present invention, the valve member is fitted with a first, straight tube portion which is substantially received in the valve housing and which is fitted with an external, closed end. This closed end may be external with an indentation to allow easily driving the valve member using a thumb or another finger. A second tube portion, branching downward from the first tube portion, constitutes the spout through which the liquid shall be discharged when the valve member is open.

An illustrative embodiment mode of the present invention is elucidated below in relation to the appended drawings.

**Fig. 1** is a perspective of a receptacle fitted with a valve system of the invention,

**Fig. 2** is an enlargement of the valve system of Fig. 1,

**Fig. 3** is a sectional view of the wall of the receptacle of Fig. 1 in the region of the valve system, but absent said system,

**Fig. 4** is a perspective of the valve system of Fig. 2 before being inserted into an adapter according to Fig. 3,

**Fig. 5** shows the valve system of Fig. 4 following completed assembly,

**Fig. 6** is a perspective of a detail of the adapter of Fig. 3,

**Fig. 7** is a perspective of the individual components of the valve system of Figs. 2, 4 and 5,

**Fig. 8** is a section of the valve system in its installed state according to Figs. 2 and 5, and

**Fig. 9** shows the installed valve system of Fig. 8 when being operated.

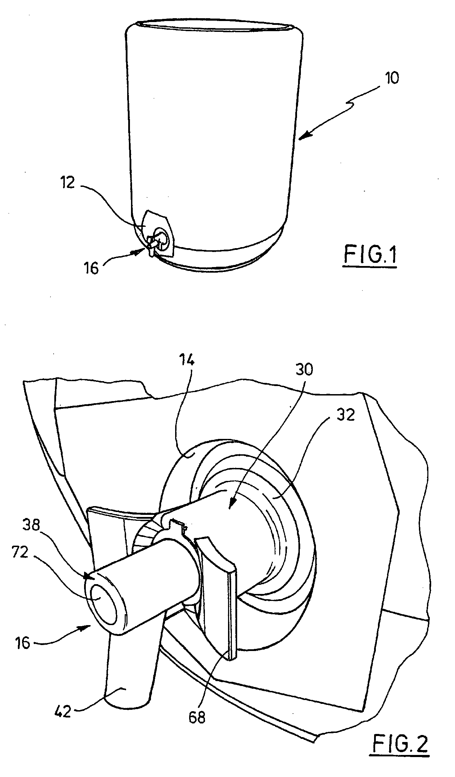

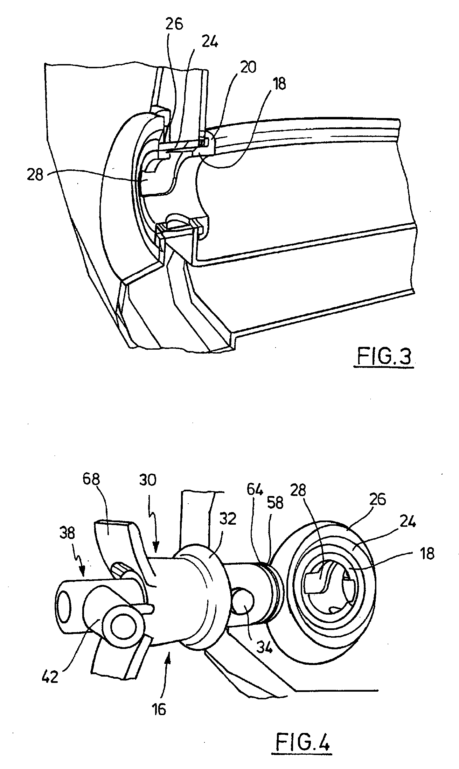

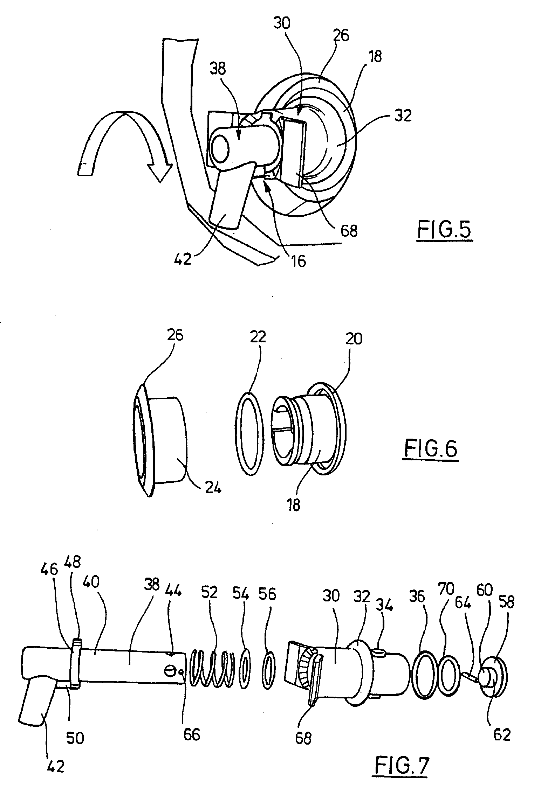

Fig. 1 shows a receptacle 10 which illustratively may be filled with drinking water. Near its omitted base the receptacle 10 is fitted with a recess 12 of which the bottom is planar. An aperture 14 in the recess bottom receives a valve system 16. The seating of the valve system 16 is shown in further detail in Figs. 3 and 4. An adapter shown in detail in Fig. 6 is mounted in the aperture 14. This adapter consists of an annular segment 18 comprising at one of its ends a flange 20 and able to seat an O-ring 22 in a groove. Another annular segment 24 is fitted with a conical flange 26. Fig. 3 shows the installed adapter of Fig. 6. The cylindrical segments of the adapter segments 18, 24 are inserted into each other, the adapter segment 24 sliding over the adapter segment 18. Said two segments constitute a snap-in connection locking the adapter in the aperture 14. This locked state is dissolved at will. Together with its seal 22, the flange 20 rests by its seal 22 against the inside of the wall, shown double in Fig. 3, of the receptacle 10, while the conical flange 26 rests against the wall outside, which is plane in this zone and whereby adequate sealing is attained.

Figs. 3 and 4 further show that the adapter segment 18 is fitted at its inside with a groove 28 allowing bayonet connection.

The individual components of the valve system are shown in Fig. 7. Said valve system comprises a tubular valve housing 30 fitted approximately centrally with a radial flange 32 at its outside. Two radial stubs 34 are configured on the right side of the flange 32. A sealing ring 36 is received in a radial groove not visible in Fig. 7. The valve system also comprises a tubular valve member 38 and a first tube segment 40, also a second tube segment 42 obliquely branching downward from said first tube segment and constituting the spout. Near its right end, the valve member 38 is fitted with four radial apertures 44. An annular flange 46 is constituted near the spout 42 which subtends radially upward a first guide portion 48 and radially downward a second guide element 50. The function of the guide elements is elucidated further below.

Fig. 7 shows a helical spring 52, a compressive ring 54, and a sealing ring 56. A valve cup 58 is shown at the right end of Fig. 7 and is fitted with an axial collar 60 with a radial borehole 62. The borehole 62 is designed to receive a radial pin 64. This pin 64 moreover may be inserted through radial boreholes 66 at the right end of the valve member.

Figs. 4 and 5 show the assembly of the full valve system. The valve member 38 and the valve housing 30 are preassembled as a finished unit as indicated in Fig. 4. The valve housing 30 is fitted at its outer end with two diametrically opposite outwardly oblique tabs 68. The assembly person grips the valve system 16 by the tabs 68 and guides the inner end of the valve housing 30 into the adapter respectively the inner adapter portion 18, the radial stubs 34 pointing toward the entry portion of the bayonet groove 28. The valve housing is advanced until the flange 32 comes to rest on the plane surface around the adapter. Next the valve system 16 is rotated clockwise by 90° into a position such as shown in Fig. 5. The said groove being slightly helical, the flange 32 is further forced against the outside of the wall of the aperture 14.

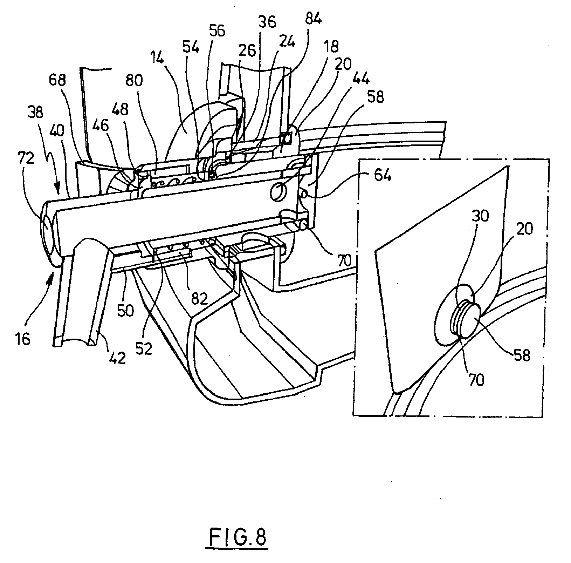

Fig. 8 clearly shows the installed position of the valve system 16. The valve spring 52 biases outward the valve member 38 and as a result the valve cup 58 effectively rests against the right end of the valve housing 30. Consequently the liquid cannot enter the inside of the valve link 38. A seal 36 situated between the adapter and the valve housing 30 prevents the liquid from flowing between the valve housing 30 and the adapter. Lastly, as already discussed above, the adapter is affixed in sealing manner in the aperture in the receptacle.

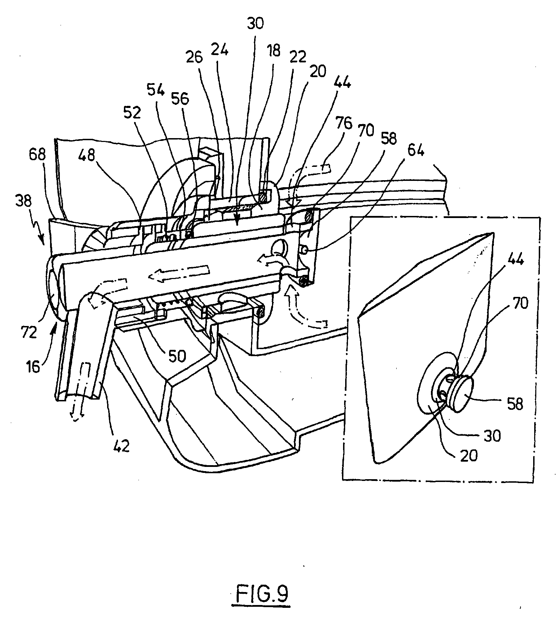

As indicated in Figs. 2, 4, 5 and 8, portion 40 of the valve member 38 comprises a closed, outer end, a recess 72 having been fitted into said out end. When finger pressure is applied to the valve member 38, it can be moved against the force of the valve spring 52 into the receptacle 10. As a result the radial apertures 44 in the valve member 38 are displaced outside the valve housing 30 and therefore the liquid can flow, as shown by the arrows 76, into the inside of the valve member 38, and by means of the spout 42 to the outside. In one illustration, at the right in Fig. 9, the open position of the valve member 38 is shown separately. As soon as said finger pressure decreases, the valve member 38 is automatically returned by the force from the spring 52 into the closed position shown in Fig. 8.

The guide portions 48 respectively 50 of the valve member 38 are guided in associated grooves in the valve housing 30, and consequently the valve member can only move axially. A groove for the guide portion 48 is denoted as 80 and another for the guide portion 50 is denoted as 82 in Fig. 8.

## Claims

1. A dispenser valve system for a receptacle which in its lower region is fitted with an aperture in its wall, comprising the features below:
- An annular adapter affixable in the aperture (14),
- A tubular valve housing (30) that can be received by the adapter in frictional or geometrically interlocking manner,
- A tubular valve member (38) that can be received in displaceable manner by the valve housing (30) and is fitted at one inner end with a sealing cup (58) which cooperates in sealing manner with an opposite sealing surface of the valve housing (30), the valve member (38) comprising at least one radial compensating aperture (44) near the sealing cup (58)
- A valve spring (52) in the valve housing (30) acting on the valve member (38) and biasing the valve cup (58) toward the valve housing (3), and
- A spout (42) at the other outer end of the valve member (38), **characterized in that** the adapter consists of two annular segments (18, 24) which can telescope into each other in locking manner, each one being fitted with an annular flange (20, 26), one annular flange (29) resting against the inside and another annular flange (26) against the outside of the wall of the receptacle (10).

2. Valve system as claimed in claim 1, **characterized in that** the outer annular flange (26) is a conical sealing flange and the inner flange (20) is a sealing ring (22).

3. Valve system as claimed in one of claims 1 or 2, **characterized in that** the valve housing (30) is connected to the adapter by a bayonet lock.

4. Valve system as claimed in one of claims 1 through 3, **characterized in that** the valve housing (30) is fitted with a peripheral radial flange (32) which, by means of an annular seal (36), rests against the outside of the receptacle wall.

5. Valve system as claimed in one of claims 1 through 4, **characterized in that** the valve cup (58) an be affixed to the valve member (38) by means of a pin (64).

6. Valve system as claimed in one of claims 1 through 5, **characterized in that** the valve member (38) cooperates with the valve housing (30) by means of a linear guide allowing only axial displacement.

7. Valve system as claimed in one of claims 1 through 6, **characterized in that** a helical spring (52) enclosing the valve member (38) is configured between a stop of the valve member (38) and a compressive ring (54) enclosing the valve member (38), the pressure ring (54) resting by means of an annular seal (56) against an annular shoulder (84) inside the valve housing (30).

8. Valve system as claimed in one of claims 1 through 7, **characterized in that**, at its outer end, the valve housing (30) is fitted with grip elements (68) configured laterally obliquely.

9. Valve system as claimed in one of claims 1 through 8, **characterized in that** the valve member (38) comprises a first straight tube portion (40) substantially received in the valve housing (30) and having a closed outer end, and a second tube portion which branches off the closed end of the first tube portion (40) and projects downward and constitutes the spout (42).

10. Valve system as claimed in claim 9, **characterized in that** the closed end is fitted with an external indentation (72).

## Patentansprüche

1. Spenderventilanordnung für ein Gefäß, das in einer Wandung im unteren Bereich ein Loch aufweist mit den folgenden Merkmalen:
• Ein im Loch (14) anbringbarer ringförmiger Adapter,
• ein rohrförmiges Ventilgehäuse (30), das mittels kraft- oder formschlüssiger Verriegelung vom Adapter aufnehmbar ist,
• ein rohrförmiges Ventilglied (38), das vom Ventilgehäuse (30) verschiebbar aufnehmbar ist und an einem inneren Ende einen Dichtungsteller (58) aufweist, der dichtend mit einer zugekehrten Dichtfläche des Ventilgehäuses (30) zusammenwirkt, wobei das Ventilglied (38) nahe dem Dichtungsteller (58) mindestens eine radiale Ausgleichsöffnung (44) aufweist,
• eine Ventilfeder (52) im Ventilgehäuse (30), die auf das Ventilglied (38) wirkt und den Ventilteller (58) gegen das Ventilgehäuse (3) vorspannt und
• eine Tülle (42) am anderen äußeren Ende **dadurch gekennzeichnet, dass** der Adapter aus zwei ringförmigen teleskopisch und verriegelbar zusammensteckbaren Abschnitten (18, 24) besteht, die jeweils einen Ringflansch (20, 26) haben, wobei ein Ringflansch (29) gegen die Innenseite und ein Ringflansch (26) gegen die Außenseite der Wandung des Gefäßes (10) anliegt.

2. Ventilanordnung nach Anspruch 1, **dadurch gekennzeichnet dass** der äußere Ringflansch (26) ein konischer Dichtflansch ist und der innere Flansch (20) einen Dichtring (22) aufnimmt.

3. Ventilanordnung nach einem der Ansprüche 1 oder 2, **dadurch gekennzeichnet dass** das Ventilgehäuse (30) über eine Bajonettverbindung mit dem Adapter verbunden ist.

4. Ventilanordnung nach einem der Ansprüche 1 bis 3, **dadurch gekennzeichnet dass** das Ventilgehäuse (30) einen umlaufenden radialen Flansch (32) aufweist, der über eine Ringdichtung (36) an der Außenseite der Gefäßwandung anliegt.

5. Ventilanordnung nach einem der Ansprüche 1 bis 4, **dadurch gekennzeichnet dass** der Ventilteller (58) mittels eines radialen Stiftes (64) am Ventilglied (38) anbringbar ist.

6. Ventilanordnung nach einem der Ansprüche 1 bis 5, **dadurch gekennzeichnet dass** das Ventilglied (38) über eine lineare Führung mit dem Ventilgehäuse (30) zusammenwirkt, welche nur eine axiale Bewegung zulässt.

7. Ventilanordnung nach einem der Ansprüche 1 bis 6, **dadurch gekennzeichnet dass** eine Schraubenfeder (52), die das Ventilglied (38) umgibt, zwischen einem Anschlag des Ventilglieds (38) und einem das Ventilglied (38) umgebenden Druckring (54) angeordnet ist, wobei der Druckring (54) über eine ringförmige Dichtung (56) gegen eine Ringschulter (84) im Inneren des Ventilgehäuses (30) anliegt.

8. Ventilanordnung nach einem der Ansprüche 1 bis 7, **dadurch gekennzeichnet dass** das Ventilgehäuse (30) an seinem äußeren Ende zur Seite schräg abstehende Griffabschnitte (68) aufweist.

9. Ventilanordnung nach einem der Ansprüche 1 bis 8, **dadurch gekennzeichnet dass** das Ventilglied (38) einen ersten geraden Rohrabschnitt (40) aufweist, der im Wesentlichen vom Ventilgehäuse (30) aufgenommen ist und ein äußeres geschlossenes Ende aufweist sowie einen zweiten Rohrabschnitt, der vor dem geschlossenen Ende vom ersten Rohrabschnitt (40) abgeht und nach unten ragt und die Tülle (42) bildet.

10. Ventilanordnung nach Anspruch 9, **dadurch gekennzeichnet dass** das geschlossene Ende eine äußere Einbuchtung (72) aufweist.

## Revendications

1. Système de soupape de distribution pour un récipient qui, dans sa région inférieure, est muni d'une ouverture dans sa paroi, comprenant les caractéristiques suivantes :
- un adaptateur annulaire pouvant être assujetti dans l'ouverture (14),
- un boîtier de soupape tubulaire (30) qui peut être reçu par l'adaptateur par emboîtement par engagement par friction ou par coopération de forme,
- un organe de soupape tubulaire (38) qui peut être reçu de manière déplaçable par le boîtier de soupape (30) et qui est muni à une extrémité interne d'une coupelle d'étanchéité (58) qui coopère de manière hermétique avec une surface d'étanchéité opposée du boîtier de soupape (30), l'organe de soupape (38) comprenant au moins une ouverture de compensation radiale (44) à proximité de la coupelle d'étanchéité (58),
- un ressort de soupape (52) dans le boîtier de soupape (30), agissant sur l'organe de soupape (38) et sollicitant la coupelle de soupape (58) vers le boîtier de soupape (30), et
- un bec (42) à l'autre extrémité externe de l'organe de soupape (38), **caractérisé en ce que** l'adaptateur est constitué de deux segments annulaires (18, 24) qui peuvent se verrouiller l'un dans l'autre de manière télescopique, chacun étant muni d'une bride annulaire (20, 26), une bride annulaire (20) reposant contre l'intérieur et une autre bride annulaire (26) contre l'extérieur de la paroi du récipient (10).

2. Système de soupape selon la revendication 1, **caractérisé en ce que** la bride annulaire extérieure (26) est une bride d'étanchéité conique et la bride intérieure (20) est une bague d'étanchéité (22).

3. Système de soupape selon la revendication 1 ou 2, **caractérisé en ce que** le boîtier de soupape (30) est connecté à l'adaptateur par un verrouillage à baïonnette.

4. Système de soupape selon l'une quelconque des revendications 1 à 3, **caractérisé en ce que** le boîtier de soupape (30) est muni d'une bride radiale périphérique (32) qui, par le biais d'un joint d'étanchéité annulaire (36), repose contre l'extérieur de la paroi du récipient.

5. Système de soupape selon l'une quelconque des revendications 1 à 4, **caractérisé en ce que** la coupelle de soupape (58) peut être assujettie à l'organe de soupape (38) au moyen d'une goupille (64).

6. Système de soupape selon l'une quelconque des revendications 1 à 5, **caractérisé en ce que** l'organe de soupape (38) coopère avec le boîtier de soupape (30) au moyen d'un guide linéaire ne permettant qu'un déplacement axial.

7. Système de soupape selon l'une quelconque des revendications 1 à 6, **caractérisé en ce qu'**un ressort hélicoïdal (52) entourant l'organe de soupape (38) est configuré entre une butée de l'organe de soupape (38) et une bague de compression (54) entourant l'organe de soupape (38), la bague de pression (54) reposant au moyen d'un joint d'étanchéité annulaire (56) contre un épaulement annulaire (84) à l'intérieur du boîtier de soupape (30).

8. Système de soupape selon l'une quelconque des revendications 1 à 7, **caractérisé en ce qu'**à son extrémité externe, le boîtier de soupape (30) est muni d'éléments de préhension (68) configurés latéralement et obliquement.

9. Système de soupape selon l'une quelconque des revendications 1 à 8, **caractérisé en ce que** l'organe de soupape (38) comprend une première portion de tube droite (40) reçue substantiellement dans le boîtier de soupape (30) et ayant une extrémité externe fermée, et une deuxième portion de tube qui part de l'extrémité fermée de la première portion de tube (40) et fait saillie vers le bas et constitue le bec (42).

10. Système de soupape selon la revendication 9, **caractérisé en ce que** l'extrémité fermée est munie d'une indentation externe (72).
